# EUROPÄISCHE PATENTSCHRIFT

(11) **EP 3 726 134 B1**
(45) Veröffentlichungstag und Bekanntmachung des Hinweises auf die Patenterteilung: **03.11.2021**
(21) Anmeldenummer: 20164104.0
(22) Anmeldetag: 19.03.2020
(51) Int. Cl.: F23K 3/00, F23K 3/02, B65G 53/46

(54) **ZELLENRADSCHLEUSE ZUR KOHLENSTAUBDOSIERUNG FÜR EINEN BRENNER**
CELLULAR WHEEL SLUICE FOR METERING COAL DUST FOR A BURNER
ÉCLUSE À ROUE CELLULAIRE DESTINÉE AU DOSAGE DU CHARBON PULVÉRISÉ POUR UN BRÛLEUR

(30) Priorität: 18.04.2019 DE 102019205732
(43) Veröffentlichungstag der Anmeldung: 21.10.2020
(73) Patentinhaber: Benninghoven GmbH & Co. KG, 54516 Wittlich (DE)
(72) Erfinder: Omerbegovic, Kemal, 41464 Neuss (DE); Martini, Torsten, 54497 Morbach-Gutenthal (DE); Zimmer, Kurt Dietmar, 54472 Longkamp (DE)
(74) Vertreter: Rau, Schneck & Hübner Patentanwälte Rechtsanwälte PartGmbB

(56) Entgegenhaltungen:
- CN-A- 106 429 456
- DE-C1- 10 117 187
- US-A- 1 772 290

## Beschreibung

Die Erfindung betrifft eine Zellenradschleuse zur Kohlenstaubdosierung für einen Brenner.

Die Leistung eines Brenners, in dem Kohlenstaub verbrannt wird, hängt unter anderem von der Menge des in den Brenner zugeführten und dort verbrannten Kohlenstaubs ab. Zur Dosierung der Kohlenstaubmenge in den Brenner dient eine Dosiervorrichtung.

Aus US 1,844,172 A, US 1,772,290 A, DE 101 17 187 C1, CN 106429456 A und EP 2 231 343 B1 ist jeweils eine Zellenradschleuse für pulverförmiges Material offenbart. Die US 1 772 290 A dient als Grundlage für die zweiteilige Form des unabhängigen Anspruchs.

Der Erfindung liegt die Aufgabe zugrunde, die Regelbarkeit des Brenners zu verbessern und insbesondere den Regelbereich des Brenners zu erweitern, insbesondere in einem unteren Lastbereich des Regelbereichs.

Die Aufgabe wird durch die Merkmale des Anspruchs 1 gelöst. Der Kern der Erfindung besteht darin, dass eine Dosiereinheit zum Dosieren einer Kohlenstaubmenge eine Auslauföffnung zur Abgabe von Kohlenstaub mit einer Kontur derart aufweist, dass die Abgabe des Kohlenstaubs aus der Dosiereinheit gleichmäßig erfolgt. Insbesondere ist es dadurch möglich, den Kohlenstaub aus der Dosiereinheit früher und kontinuierlicher auszutragen. Eine gleichmäßige Abgabe des Kohlenstaubs im Sinne der Erfindung ist insbesondere dann gegeben, wenn bei einer kontinuierlichen, gleichmäßigen Drehbewegung eines Zellenrads in der Zellenradschleuse, also bei einer Drehbewegung mit konstanter Drehgeschwindigkeit, die dosierte Kohlenstaubmenge mit im Wesentlichen konstantem Massestrom aus der Dosiereinheit abgegeben wird. Im Wesentlichen konstant ist der Massestrom dann, wenn eine relative Abweichung des Ist-Massestroms bezogen auf den Mittelwert des Massestroms für die Abgabe der dosierten Kohlenstaubmenge höchstens 10 % beträgt, insbesondere höchstens 8 %, insbesondere höchstens 5 %, insbesondere höchstens 3 % und insbesondere höchstens 1 %. Der Mittelwert des Massestroms ergibt sich als Quotient aus der Masse der dosierten Kohlenstaubmenge und dem Zeitintervall, innerhalb dessen die dosierte Kohlenstaubmenge einer Zellenradkammer abgegeben wird. Die Auslauföffnung ist stirnseitig am Zellenrad und insbesondere an den Zellemadkammern angeordnet.

Die Dosiereinheit ist als Zellenradschleuse ausgeführt. Eine gleichmäßige Abgabe des Kohlenstaubs ist insbesondere auch dann gegeben, wenn die Fläche der Auslauföffnung entlang der Drehrichtung des Zellenrads im Wesentlichen, insbesondere exakt, kontinuierlich ansteigt. Es ist auch möglich, dass die Fläche der Auslauföffnung entlang der Drehrichtung des Zellenrads nicht kontinuierlich ansteigt. Insbesondere kann der Anstieg der Querschnittsfläche der Auslauföffnung entlang der Drehrichtung unkonstant sein und insbesondere mindestens ein lokales Maximum aufweisen. Insbesondere ist der Anstieg der Querschnittsfläche der Auslauföffnung entlang der Drehrichtung höchstens 0,5, insbesondere kleiner als 0,4, insbesondere kleiner als 0,3, insbesondere kleiner als 0,25, insbesondere kleiner als 0,2, insbesondere kleiner als 0,15 und insbesondere kleiner als 0,1.

Es wurde erkannt, dass eine aus dem Stand der Technik bekannte kreisförmige Auslauföffnung eine schwallartige Abgabe des Kohlenstaubs aus der Zellenradschleuse bewirkt. Eine schwallartige Abgabe des Kohlenstaubs bewirkt eine ungleichmäßige Brennstoffversorgung des Brenners und bewirkt ein ungleichmäßiges Brennverhalten des Brenners, was erfindungsgemäß verhindert ist. Pulsationen bei der Dosierung, insbesondere in einem unteren Regelbereich, werden minimiert. Der Regelbereich des Brenners ist in dem unteren Lastbereich erweitert, also erhöht. Die Auslauföffnung ist insbesondere unrund ausgeführt. Die Auslauföffnung weist eine Kontur auf, die zumindest abschnittsweise konkav ausgeführt ist. Die Auslauföffnung ist in einem Übergangsbereich zwischen einem Anfangsabschnitt und einem Endabschnitt konkav ausgeführt. Die Zellenradschleuse weist ein Gehäuse mit einer Zulauföffnung auf, die zum Zuführen von Kohlenstaub in die Zellenradschleuse dient. In dem Gehäuse ist das Zellenrad um eine Drehachse entlang der Drehrichtung antreibbar gelagert. Die Drehachse ist insbesondere senkrecht zur Auslauföffnung orientiert. Die Zellenradschleuse ist insbesondere derart angeordnet, dass die Drehachse des Zellenrads vertikal orientiert ist. Die Zellenradschleuse ist insbesondere eine Vertikal-Zellenradschleuse.

Die erfindungsgemäße Ausführung der Kontur mit einem in Drehrichtung vorlaufenden Anfangsabschnitt, dessen Radialausdehnung in Bezug auf die Drehachse kleiner ist als eine Radialausdehnung eines in Drehrichtung nachlaufenden Endabschnitts, gewährleistet insbesondere eine anfangs gezielt verringerte Abgabe von Kohlenstaub durch einen Anfangsabschnitt der Auslauföffnung. Eine weitere Abgabe des Kohlenstaubs erfolgt durch den Endabschnitt, um eine, insbesondere effiziente und schnelle Entleerung der Zellenradkammer zu gewährleisten. Wesentlich ist, dass der Anfangsabschnitt eine Radialausdehnung aufweist, die kleiner ist als eine Radialausdehnung des nachlaufenden Endabschnitts. Insbesondere ist die Fläche des Anfangsabschnitts kleiner als die Fläche des Endabschnitts. Insbesondere beträgt die Fläche des Anfangsabschnitts weniger als die Hälfte der Fläche des Endabschnitts, insbesondere weniger als 30 % der Fläche des Endabschnitts, insbesondere weniger als 25 % der Fläche des Endabschnitts, insbesondere weniger als 20 % der Fläche des Endabschnitts und insbesondere weniger als 15 % der Fläche des Endabschnitts.

Eine jeweils mittlere Radialausdehnung des Anfangsabschnitts und des Endabschnitts ergibt sich aus einem Mittelwert der Radialausdehnungen in Abhängigkeit des Drehwinkels. Insbesondere ist die mittlere Radialausdehnung des Anfangsabschnitts kleiner als 50 % der mittleren Radialausdehnung des Endabschnitts, insbesondere kleiner als 40 % der mittleren Radialausdehnung des Endabschnitts, insbesondere kleiner als 30 % der mittleren Radialausdehnung des Endabschnitts und insbesondere kleiner als 20 % der mittleren Radialausdehnung des Endabschnitts.

Eine Ausgestaltung der Zellenradschleuse gemäß Anspruch 2, bei der die Radialausdehnung des Anfangsabschnitts entlang der Drehrichtung, insbesondere kontinuierlich, ansteigt, gewährleistet eine anfangs langsame und kontinuierliche Abgabe des Kohlenstaubs.

Eine Ausgestaltung der Zellenradschleuse gemäß Anspruch 3 gewährleistet eine effiziente Entleerung einer Zellenradkammer.

Eine Ausführung der Zellenradschleuse gemäß Anspruch 4 gewährleistet eine kontinuierliche Abgabe des Kohlenstaubs aus der Zellenradschleuse und insbesondere anfänglich ausschließlich über den Anfangsabschnitt der Auslauföffnung. Insbesondere erstreckt sich der Anfangsabschnitt entlang der Drehrichtung des Zellenrads über mindestens 50 % einer Kammerbreite des Zellenrads. Die Kammerbreite des Zellenrads ist durch zwei benachbarte Rotorblätter definiert. Insbesondere beträgt der Drehwinkel des Anfangsabschnitts mindestens 60 % der Kammerbreite, insbesondere mindestens 70 % der Kammerbreite, insbesondere mindestens 80 % der Kammerbreite, insbesondere mindestens 90 % der Kammerbreite und insbesondere genau 100 % der Kammerbreite. Der Drehwinkel des Anfangsabschnitts kann auch mehr als 100 % der Kammerbreite betragen.

Eine Zellenradschleuse gemäß Anspruch 5 gewährleistet eine zuverlässige und schnelle Abgabe einer größeren Menge des Kohlenstaubs aus der Kammer des Zellenrads. Insbesondere beträgt ein Drehwinkel des Endabschnitts mindestens eine Kammerbreite des Zellenrads, insbesondere mindestens das 1,2-fache der Kammerbreite, insbesondere mindestens das 1,5-fache der Kammerbreite, insbesondere mindestens das 1,8-fache der Kammerbreite und insbesondere genau das 2,0-fache der Kammerbreite. Der Drehwinkel des Endabschnitts kann auch mehr als das 2-fache der Kammerbreite betragen.

Eine Zellenradschleuse gemäß Anspruch 6 gewährleistet eine kontrollierte, gleichmäßige Abgabe des Kohlenstaubs. Insbesondere ist die Radialausdehnung des Anfangsabschnitts kleiner als 50 % der Radialausdehnung der Zellenradkammer, insbesondere kleiner als 45 % der Radialausdehnung der Zellenradkammer, insbesondere kleiner als 40 % der Radialausdehnung der Zellenradkammer, insbesondere kleiner als 35 % der Radialausdehnung der Zellenradkammer, insbesondere kleiner als 30 % der Radialausdehnung der Zellenradkammer und insbesondere kleiner als 25 % der Radialausdehnung der Zellenradkammer.

Eine Ausgestaltung der Zellenradschleuse gemäß Anspruch 7 gewährleistet eine effiziente und insbesondere vollständige Entleerung der Zellenradkammer. Die Radialausdehnung des Endabschnitts ist größer als 70 % der Radialausdehnung der Zellenradkammer, insbesondere größer als 75 % der Radialausdehnung der Zellenradkammer, insbesondere größer als 80 % der Radialausdehnung der Zellenradkammer, insbesondere größer als 85 % der Radialausdehnung der Zellenradkammer, insbesondere größer als 90 % der Radialausdehnung der Zellenradkammer und insbesondere größer als 95 % der Radialausdehnung der Zellenradkammer. Insbesondere entspricht die Radialausdehnung des Endabschnitts der Radialausdehnung der Zellenradkammer, so dass sich die Auslauföffnung im Bereich des Endabschnitts über die gesamte Radialausdehnung der Zellenradkammer erstreckt.

Insbesondere ist zwischen dem Übergang des Anfangsabschnitts zu dem Endabschnitt ein sprunghafter Anstieg von der Radialausdehnung des Anfangsabschnitts zu der Radialausdehnung des Endabschnitts vorgesehen.

Eine Kontur der Auslauföffnung gemäß Anspruch 8 hat sich als besonders vorteilhaft erwiesen.

Eine Ausführung der Zellenradschleuse gemäß Anspruch 9 gewährleistet eine selbsttätige, schwerkraftbedingte Entleerung der Zellenradschleuse.

Sowohl die in den Patentansprüchen angegebenen Merkmale als auch die in dem nachfolgenden Ausführungsbeispiel einer erfindungsgemäßen Zellenradschleuse angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

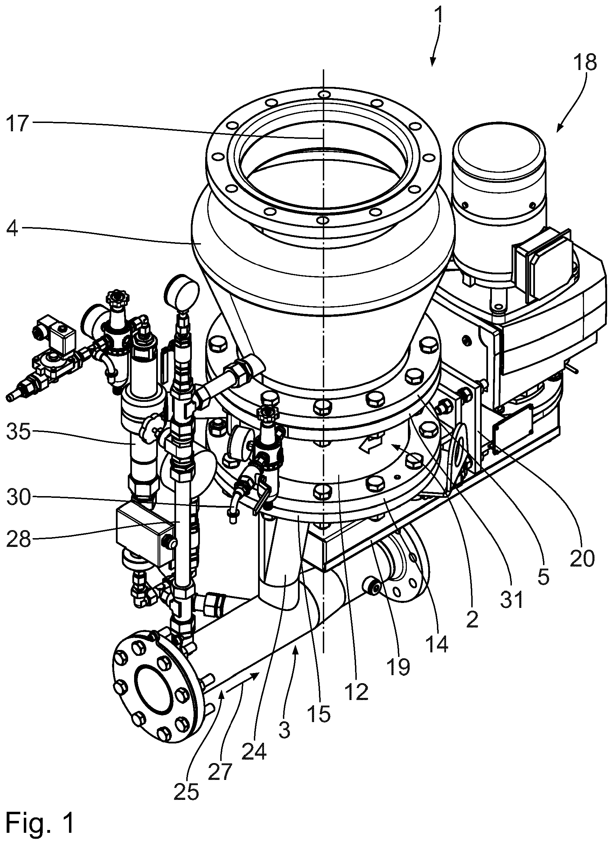

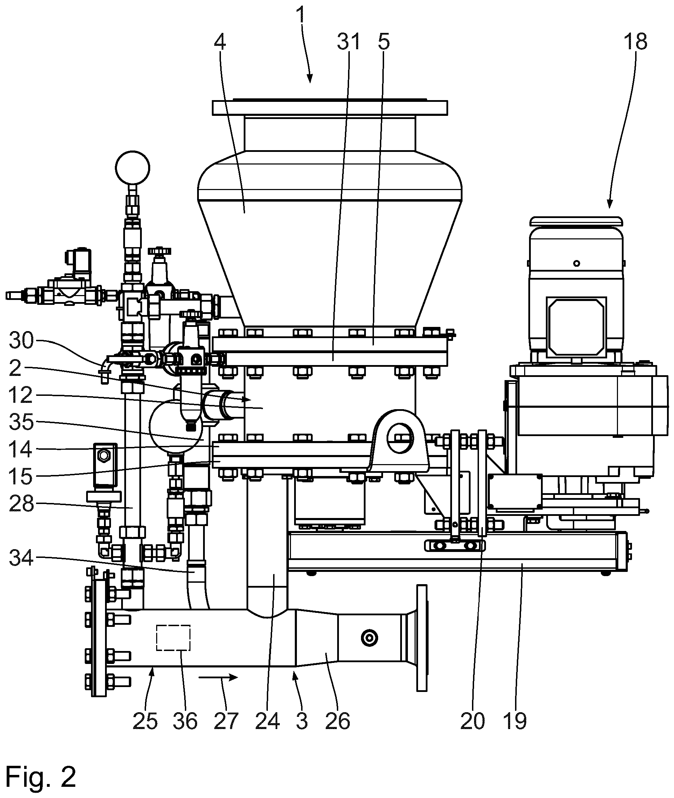

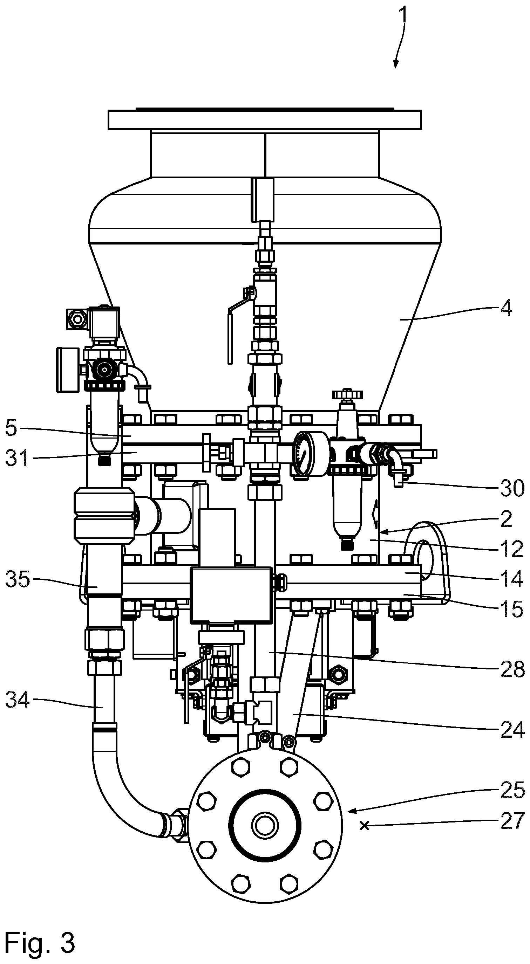

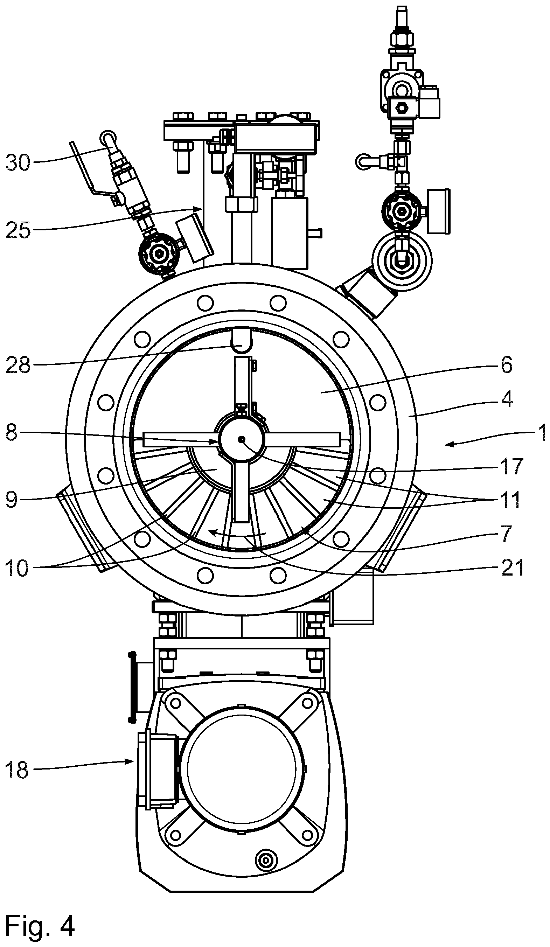

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine perspektivische Ansicht von oben einer Kohlenstaubverbrennungsvorrichtung mit einer erfindungsgemäßen Zellenradschleuse,
- Fig. 2: eine Seitenansicht der Kohlenstaubverbrennungsvorrichtung gemäß Fig. 1,
- Fig. 3: eine Frontansicht der Kohlenstaubverbrennungsvorrichtung gemäß Fig. 1,
- Fig. 4: eine Draufsicht auf die Kohlenstaubverbrennungsvorrichtung von oben gemäß Fig. 1,
- Fig. 5: eine vergrößerte teilgeschnittene Darstellung der Kohlenstaubverbrennungsvorrichtung in einer ersten Anordnung der Zellenradschleuse,
- Fig. 6: eine Fig. 5 entsprechende Darstellung in einer zweiten Anordnung der Zellenradschleuse,
- Fig. 7: eine weitere, Fig. 5 entsprechende Darstellung in einer verschiedenen Anordnung der Zellenradschleuse,
- Fig. 8: eine vergrößerte Ansicht eines unteren Gehäusedeckels der Zellenradschleuse und
- Fig. 9: eine perspektivische Darstellung einer Verbindungsleitung mit Fallrohr.
Eine in Fig. 1 bis 4 als Ganzes mit 1 gekennzeichnete Kohlenstaubverbrennungsvorrichtung umfasst eine Dosiereinheit in Form einer Zellenradschleuse 2 zum Dosieren einer Kohlenstaubmenge. Die Kohlenstaubverbrennungsvorrichtung 1 umfasst eine in den Figuren nicht dargestellte Brennereinheit zum Verbrennen der dosierten Kohlenstaubmenge. Die Kohlenstaubverbrennungsvorrichtung 1 umfasst eine Verbindungsleitung 3, die die Dosiereinheit 2 mit der Brennereinheit verbindet.

Oberhalb der Dosiereinheit 2 ist ein Zwischenbehälter 4 angeordnet. Der Zwischenbehälter 4 ist mit einem nicht dargestellten Kohlenstaubsilo verbunden. In dem Kohlenstaubsilo wird Kohlenstaub zwischengelagert und in den Zwischenbehälter 4 gefördert. Insbesondere ist das Kohlenstaubsilo oberhalb des Zwischenbehälters 4 angeordnet.

Der Zwischenbehälter 4 ist konzentrisch zu der Zellenradschleuse 2 angeordnet. Der Zwischenbehälter 4 ist entlang der Schwerkraft, insbesondere konisch, verjüngend ausgeführt, um eine selbsttätige Förderung des Kohlenstaubs in die Zellenradschleuse 2 zu ermöglichen. Der Zwischenbehälter 4 ist mit der Zellenradschleuse 2 über eine Flanschverbindung 5 verbunden. Insbesondere ist der Zwischenbehälter 4 auf einen oberen Gehäusedeckel 31 der Zellenradschleuse 2 aufgesetzt und mittels der Flanschverbindung 5 damit verbunden.

Im Bereich einer unteren Ausgangsöffnung 7 ist an dem Zwischenbehälter 4 ein Trennboden 6 angeordnet, der die Ausgangsöffnung 7 zumindest bereichsweise verschließt. Durch den Trennboden 6 ist der Zwischenbehälter 4 von der Zellenradschleuse 2 getrennt. Der Trennboden 6 ist durch den oberen Gehäusedeckel 31 der Zellenradschleuse 2 gebildet. Der Trennboden 6 ist gemäß dem gezeigten Ausführungsbeispiel halbkreisförmig ausgeführt und deckt im Wesentlichen die Hälfte der Ausgangsöffnung 7 ab. Über die andere Hälfte, die nicht von dem Trennboden 6 abgedeckt ist, kann Kohlenstaub unmittelbar aus dem Zwischenbehälter 4 über die Ausgangsöffnung 7 in die Zellenradschleuse 2 gelangen.

In dem Zwischenbehälter 4 ist ein Rührwerk 8 mit mindestens einer Rührspeiche, insbesondere mit vier Rührspeichen vorgesehen. Das Rührwerk 8 lockert und befördert den Kohlenstaub gleichmäßig in die darunterliegende Zellenradschleuse 2.

Die Zellenradschleuse 2 ist eine Vertikal-Zellenradschleuse.

Die Zellenradschleuse 2 weist ein Zellenrad 9 auf mit zwanzig Zellenwänden 10. Die Zellenwände 10 werden auch als Rotorblätter bezeichnet. Zwischen zwei Rotorblättern 10 ist jeweils eine Zellenradkammer 11 gebildet. Das Zellenrad 9 weist zwanzig Zellenradkammern 11 auf. Die Zellenradkammern 11 sind identisch ausgeführt und weisen insbesondere eine identische Größe auf.

Das Zellenrad 9 ist in einem Gehäuse 12 der Zellenradschleuse 2 angeordnet. Das Gehäuse 12 ist im Wesentlichen rohrzylindrisch ausgeführt, wobei die Zylinderachse vertikal orientiert ist. Das Zellenrad 9 ist in dem Gehäuse 12 um eine Drehachse 17 drehantreibbar gelagert. Die Drehachse 17 ist insbesondere identisch mit der Zylinderachse des Gehäuses 12. Die Drehachse 17 ist insbesondere vertikal orientiert.

Die Drehachse 17 ist insbesondere identisch mit der Rührwerkachse des Rührwerks 8.

An der oberen Flanschverbindung 5 weist das Gehäuse 12 eine Zulauföffnung 13 auf, um Kohlenstaub aus dem Zwischenbehälter 4 in die Zellenradschleuse 2 zuzuführen. Die Zulauföffnung 13 entspricht der Ausgangsöffnung 7. Insbesondere ist die Zulauföffnung 13 identisch mit der Ausgangsöffnung 7.

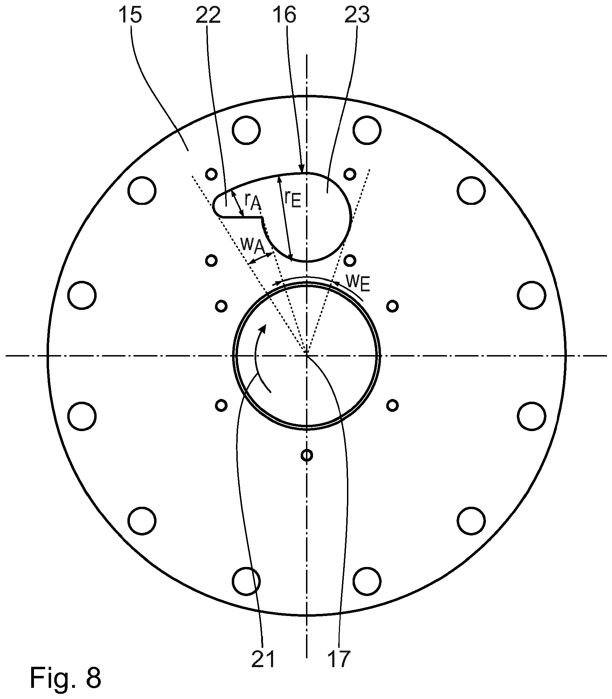

An einer unteren Flanschverbindung 14 ist am Gehäuse 12 ein unterer Gehäusedeckel 15 an dem Gehäuse 12 befestigt. Der untere Gehäusedeckel 15 ist separat in Fig. 8 dargestellt. Der untere Gehäusedeckel 15 weist eine Auslauföffnung 16 auf, durch die der Kohlenstaub aus der Zellenradschleuse 2 gleichmäßig abgegeben wird.

Das Zellenrad 9 wird von einem frequenzgeregelten Getriebemotor 18 über eine nicht dargestellte Kette, die in einem Kettengehäuse 19 läuft, angetrieben. Gemäß dem gezeigten Ausführungsbeispiel beträgt die Grundlast für den Getriebemotor etwa 1 min⁻¹. Bei Volllast wird der Getriebemotor 18 mit 20 min⁻¹ angetrieben.

Das Rührwerk 8 ist starr mit dem Zellenrad 9 verbunden. Eine Drehung des Zellenrads 9 bewirkt instantan eine Drehung des Rührwerks 8.

Der Getriebemotor 18 ist mittels einer Motorhalterung 20 gehalten.

Im Folgenden wird anhand von Fig. 8 die Auslauföffnung 16 näher erläutert. Die Auslauföffnung 16 ist im Wesentlichen tropfenförmig oder pfeifenförmig ausgeführt. Die Auslauföffnung 16 ist einteilig ausgeführt. Die Auslauföffnung 16 weist entlang der Drehrichtung 21 des Zellenrads 9 einen vorlaufenden Anfangsabschnitt 22 und einen nachlaufenden Endabschnitt 23 auf.

Der Anfangsabschnitt 22 weist eine Radialausdehnung r_{A} auf, die kleiner ist als eine Radialausdehnung r_{E} des Endabschnitts 23. Der Anfangsabschnitt 22 und der Endabschnitt 23 sind einteilig miteinander verbunden.

In Drehrichtung 21 erstreckt sich der Anfangsabschnitt 22 entlang eines Drehwinkels w_{A}. Der Endabschnitt 23 erstreckt sich in Drehrichtung um einen Drehwinkel w_{E}. Gemäß dem gezeigten Ausführungsbeispiel beträgt der Drehwinkel w_{A} des Anfangsabschnitts 22 15°. Der Drehwinkel w_{E} des Endabschnitts 23 beträgt gemäß dem gezeigten Ausführungsbeispiel 30°. Die Radialausdehnung r_{A} des Anfangsabschnitts 22 ist entlang der Drehrichtung 21 ansteigend, insbesondere kontinuierlich ansteigend, ausgeführt. Der Anfangsabschnitt 22 ist im Wesentlichen als ein sich in Drehrichtung 21 öffnendes U ausgeführt.

Der Endabschnitt 23 ist in Wesentlichen kreisförmig ausgeführt.

Die Zellemadkammern 11 sind in radialer Richtung durch das Zellenrad 9 und das Gehäuse 12 begrenzt. Die Radialausdehnung r_{A} des Anfangsabschnitts 22 beträgt gemäß dem gezeigten Ausführungsbeispiel weniger als 50 % der Radialausdehnung r_{K} der Zellenradkammer 11. Die Radialausdehnung des Endabschnitts 23 entspricht gemäß dem gezeigten Ausführungsbeispiel der Radialausdehnung r_{K} der Zellenradkammer 11.

Die Drehwinkelausdehnung der Zellenradkammer 11 wird auch als Kammerbreite w_{K} bezeichnet. Gemäß dem gezeigten Ausführungsbeispiel beträgt die Kammerbreite w_{K} 15°. Gemäß dem gezeigten Ausführungsbeispiel ist der Drehwinkel W_{A} des Anfangsabschnitts 22 so groß wie die Kammerbreite w_{K}. Der Drehwinkel w_{E} des Endabschnitts 23 beträgt gemäß dem gezeigten Ausführungsbeispiel das 2-fache der Kammerbreite w_{K}.

An die Auslauföffnung 16 ist die Verbindungsleitung 3 angeschlossen. Die Verbindungsleitung 3 umfasst ein im Wesentlichen vertikal orientiertes Fallrohr 24 und eine Förderleitung 25. Die Förderleitung 25 ist mit dem nicht dargestellten Brenner verbunden. Die Förderleitung 25 ist im Wesentlichen horizontal angeordnet. Die Förderleitung 25 ist in dem Bereich, in dem das Fallrohr 24 angekoppelt ist, als Diffusor 26 ausgeführt. Entlang der Förderrichtung 27 verkleinert sich die Rohrquerschnittsfläche des Diffusors 26.

Stromaufwärts bezogen auf die Förderrichtung 27 ist an den Diffusor 26 ein nicht dargestelltes Fördergebläse angeschlossen, um einen Förderluftstrom bereitzustellen.

An die Förderleitung 25 ist eine erste Druckluftleitung 28 angeschlossen, die über eine äußere Mantelwand in den Zwischenbehälter 4 oberhalb des unteren Gehäusedeckels 15 und durch diesen hindurch geführt ist. Die erste Druckluftleitung 28 mündet in die Zellenradschleuse 2 oberhalb der Auslauföffnung 16. Insbesondere ist eine Öffnung der ersten Druckluftleitung 28 fluchtend und insbesondere konzentrisch zur Auslauföffnung 16 angeordnet.

Über die erste Druckluftleitung 28 kann die Zellenradkammer 11, die sich im Bereich der Auslauföffnung 16 befindet, von oben mit Druckluft durchströmt werden, um eine Entleerung der Zellenradkammer 11 zu verbessern und insbesondere eine vollständige Entleerung der Zellenradkammer 11 sicherzustellen. Die erste Druckluftleitung 28 mündet in einer ersten Zuluftöffnung 29 an der Zellenradschleuse 2. Die erste Zuluftöffnung 29 ist fluchtend zu dem Endabschnitt 23 angeordnet. Die erste Zuluftöffnung 29 ist gemäß dem gezeigten Ausführungsbeispiel senkrecht zur Drehachse 17 orientiert. Die durch die erste Zuluftöffnung 29 zugeführte Förderluft ist parallel zur Drehachse 17 orientiert und ermöglicht ein verbessertes Ausblasen des Kohlenstaubs. Der Kohlenstaub wird vertikal, also parallel zur Drehachse 17, aus der Zellenradschleuse 2 gefördert.

Ferner ist an die Zellenradschleuse eine zweite Druckluftleitung 30 angeschlossen. Die zweite, zusätzliche Druckluftleitung 30 wird durch eine seitliche Öffnung im oberen Gehäusedeckel 31 der Zellenradschleuse 2 geführt. In dem oberen Gehäusedeckel 31 ist eine zweite Zuluftöffnung 32 vorgesehen. Die zweite Zuluftöffnung 32 ist gemäß dem gezeigten Ausführungsbespiel senkrecht zur Drehachse 17 orientiert, so dass die über die zweite Druckluftleitung 30 zugeführte Luft von oben in die jeweilige Zellenradkammer 11 strömt. Die zweite Zuluftöffnung 32 ist fluchtend zu der Auslauföffnung 16, insbesondere zu dem Anfangsabschnitt 22, angeordnet.

Entlang der Drehrichtung 21 ist die zweite Zuluftöffnung 32 vor der ersten Zuluftöffnung 29 angeordnet. Gemäß dem gezeigten Ausführungsbeispiel ist die zweite Zuluftöffnung 32 mit einem Drehwinkel w bezüglich der Drehachse 17 von 15° vor der ersten Zuluftöffnung 29 angeordnet. Insbesondere beträgt der Drehwinkelversatz zwischen der zweiten Zuluftöffnung 32 und der ersten Zuluftöffnung 29 der Kammerbreite w_{K}, also gemäß dem gezeigten Ausführungsbeispiel 15°. Insbesondere entspricht der Drehwinkelversatz zwischen der zweiten Zuluftöffnung 32 und der ersten Zuluftöffnung 29 dem Drehwinkel w_{A} des Anfangsabschnitts 22. Insbesondere beträgt der Drehwinkelversatz mindestens 80 % des Drehwinkels w_{A} des Anfangsabschnitts 22, insbesondere mindestens 90 % des Drehwinkels w_{A} des Anfangsabschnitts 22 und mindestens 95 % des Drehwinkels w_{A} des Anfangsabschnitts 22. Dadurch ist gewährleistet, dass die über den Anfangsabschnitt 22 abzugebende Kohlenstaubmenge abgegeben worden ist, bevor die zu entleerende Zellenradkammer 11 von dem Anfangsabschnitt 22 zu dem Endabschnitt 23 geführt wird.

An einer äußeren Zylindermantelfläche des Gehäuses 12 des Zellenrads 2 ist eine Absaugöffnung 33 angeordnet, an die eine Absaugleitung 34 angeschlossen ist. Über die Absaugöffnung 33 und die Absaugleitung 34 kann Leckluft aus der Zellenradschleuse 2 abgesaugt werden, die bei der Drehbewegung des Zellenrades 9 entstanden ist. Die Leckluft wird insbesondere aus der Zellenradkammer 11 abgesaugt, bevor die Zellenradkammer 11 wieder mit Kohlenstaub aus dem Zwischenbehälter 4 befüllt wird.

Bezogen auf die Drehachse 17 ist die Absaugöffnung 33 der ersten Zuluftöffnung 29 und der zweiten Zuluftöffnung 32 nachgeordnet.

In die Absaugleitung 34 ist eine Venturi-Düse 35 integriert, um den Absaugvorgang der Leckluft aus der Zellenradschleuse 2 zu begünstigen. An einem der Zellenradschleuse 2 abgewandten Ende mündet die Absaugleitung 34 in die Förderleitung 25. Die Absaugleitung 34 mündet in die Förderleitung 34 bezogen auf die Förderrichtung 27 in dem Bereich, in dem das Fallrohr 24 in die Förderleitung 25 mündet. Bezogen auf die Förderrichtung 27 ist die erste Druckluftleitung 28 stromaufwärts des Fallrohrs 24 und der Absaugleitung 34 an der Förderleitung 25 angeschlossen.

In der Förderleitung 25 ist ein Injektor 36 integriert. Der Injektor 36 ist bezogen auf die Förderrichtung 27 bezüglich des Fallrohrs 24 und der Mündung der Absaugleitung 34 in die Förderleitung 25 stromaufwärts angeordnet. Der Injektor 36 ist bezogen auf die Förderrichtung 27 stromabwärts bezüglich des Anschlusses der ersten Druckluftleitung 28 in der Förderleitung 25 angeordnet.

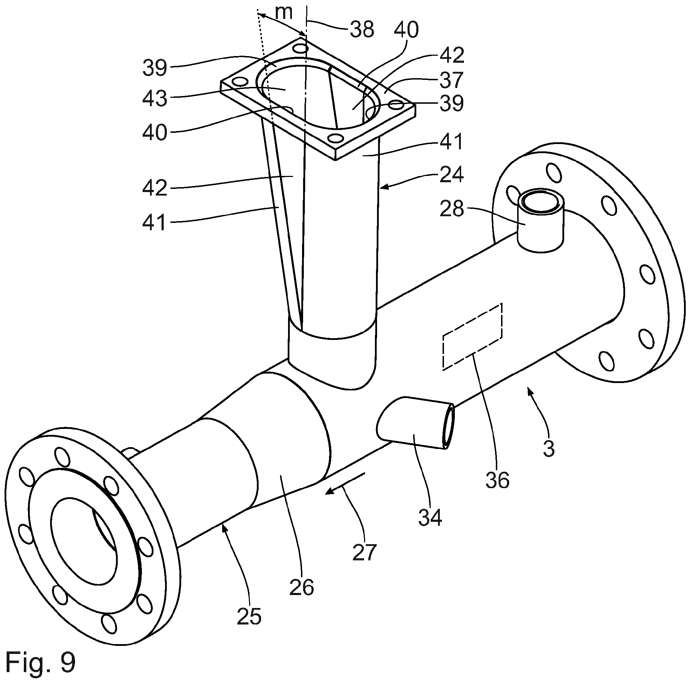

Nachfolgend wird anhand der Fig. 9 die Förderleitung 25 mit dem Fallrohr 24 näher erläutert. Das Fallrohr 24 weist eine obere, der Zellenradschleuse 2 zugewandte Anschlussplatte 37 auf. Mit der Anschlussplatte 37 ist das Fallrohr 24 an die Zellenradschleuse 2, insbesondere am unteren Gehäusedeckel 15 im Bereich der Auslauföffnung 16 befestigt, insbesondere angeflanscht.

Im Bereich der Anschlussplatte 37 weist das Fallrohr 24 eine im Wesentlichen langlochförmige Querschnittsform auf. Die langlochförmige Kontur der Förderquerschnittsfläche des Fallrohrs 24 umfasst zwei gegenüberliegend angeordnete Halbkreisbögen 39, die durch zwei dazwischenliegende Geradabschnitte 40 miteinander verbunden sind. Die Querschnittsfläche des Fallrohrs 24 ist größer als die Auslauföffnung 16. Insbesondere ist die Auslauföffnung 16 vollständig durch die Querschnittsfläche des Fallrohrs 24 im Bereich der Anschlussplatte 37 abgedeckt. Sämtlicher, über die Auslauföffnung 16 aus der Zellenradschleuse 2 abgegebener Kohlenstaub gelangt unmittelbar in das Fallrohr 24. Das Fallrohr 24 weist eine Rohrlängsachse 38 auf, die vertikal orientiert ist. Eine Förderquerschnittsfläche des Fallrohrs 24 nimmt entlang der nach unten gerichteten Förderrichtung kontinuierlich ab.

Die Förderquerschnittsfläche weist insbesondere eine langlochförmige, runde oder ovale Kontur auf. Insbesondere ist die Außenkontur der Förderquerschnittsfläche konvex ausgeführt. Insbesondere ist die Rutschfläche des Fallrohrs 24 rinnenartig ausgeführt.

Insbesondere ist das Fallrohr 24 unmittelbar an die Förderleitung 25 angeschlossen. Im Bereich der Verbindung des Fallrohrs 24 an die Förderleitung 25 findet insbesondere eine Umlenkung des Kohlenstaubstroms entlang der Verbindungsleitung 3 statt, insbesondere eine 90°-Umlenkung. Die Förderleitung 25 und das Fallrohr 24 bilden insbesondere ein T-Stück.

Die Förderquerschnittsfläche ist doppelsymmetrisch ausgeführt, wobei eine erste Symmetrieachse senkrecht zu den Geradabschnitten 40 und die zweite Symmetrieachse senkrecht zu der ersten Symmetrieachse verläuft.

Die Kontur der Förderquerschnittsfläche ist insbesondere knickfrei ausgeführt. Das Risiko eines Anhaftens von Kohlenstaub in Knickbereichen des Fallrohrs 24 ist vermieden. Die kreisbogenförmigen Konturabschnitte des Fallrohrs 24 sind durch zwei Halbrohre 41 ausgeführt, die durch zwei dreieckförmige Blecheinsätze 42 miteinander verbunden sind. Die beiden Halbrohre 41 sind mit einem Neigungswinkel m zueinander orientiert. Der Neigungswinkel m beträgt gemäß dem gezeigten Ausführungsbeispiel 10°. Vorteilhafterweise ist der Neigungswinkel m in einem Bereich zwischen 2° und 30°, insbesondere in einem Bereich von 5° bis 20° festgelegt.

Insbesondere ist mindestens eines der Halbrohre 41 gegenüber der Vertikalen geneigt. Dieses gegenüber der Vertikalen geneigt angeordnete Halbrohr 41 weist an seiner Innenseite eine Rutschfläche 43 für den Kohlenstaub auf. Die Rutschfläche ist rinnenartig ausgeführt und weist insbesondere eine Halbkreiskontur auf.

Nachfolgend wird die Funktionsweise der Kohlenstaubverbrennungsvorrichtung 1 näher erläutert. Aus dem nicht dargestellten Kohlenstaubsilo wird Braunkohlestaub in den Zwischenbehälter 4 abgegeben. Mittels des Rührwerks 8 wird der Kohlenstaub in dem Zwischenbehälter 4 gelockert. Der gelockerte Kohlenstaub wird mittels des Rührwerks 8 durch die Zulauföffnung 13 im oberen Gehäusedeckel 31 in die Zellenradschleuse 2 gefördert und auf die Zellenradkammern 11, die sich unterhalb der Zulauföffnung 13 befinden, gefüllt.

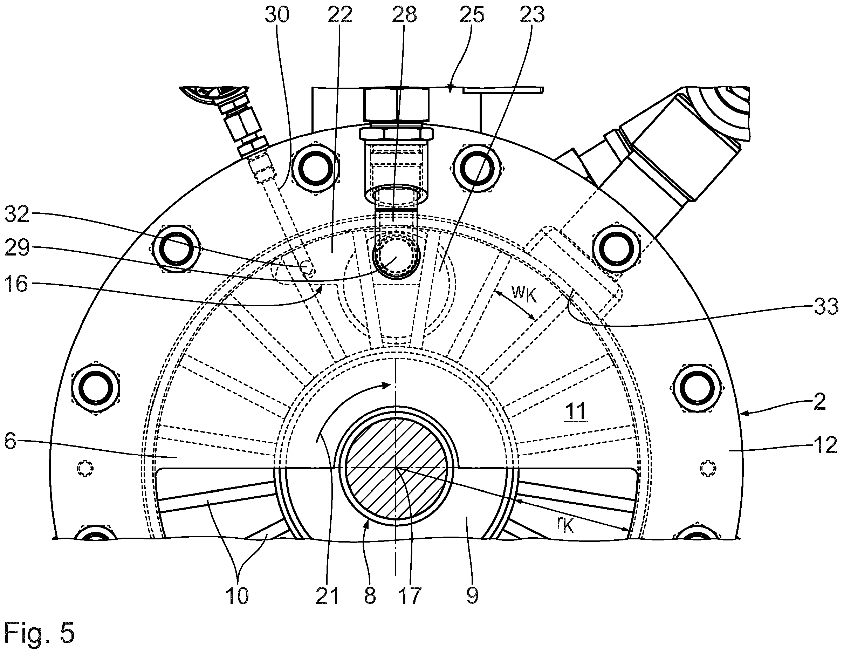

Das Zellenrad 9 wird über den Getriebemotor 18 und die im Kettengehäuse 19 angeordnete Kette angetrieben. Der Getriebemotor 18 ist frequenzgeregelt. Je höher die Drehzahl des Getriebemotors 18, also je höher die Drehzahl des Zellenrads 2, desto größer ist der Massedurchsatz von Kohlenstaub durch die Zellenradschleuse 2 und damit die zugeführte Kohlenstaubmenge in den Brenner. Durch die Drehbewegung des Zellenrads 9 entlang der Drehrichtung 21 wird der Kohlenstaub in den Zellenradkammern 11 zu der Auslauföffnung 16 gefördert. Über die zweite Zuluftöffnung 32 wird im Bereich des Anfangsabschnitts 22 Druckluft zugeführt. Dadurch ist gewährleistet, dass der Kohlenstaub in Bewegung versetzt wird und damit fließfähig bleibt. Ein Zusetzen des Kohlenstaubs ist vermieden. Dadurch, dass der Anfangsabschnitt 22 eine vergleichsweise kleine Radialausdehnung r_{A} aufweist, kann der Kohlenstaub gleichmäßig über die Auslauföffnung 16 aus der Zellenradschleuse 2 in das Fallrohr 24 abgegeben werden. Dieser Zustand ist in Fig. 5 dargestellt.

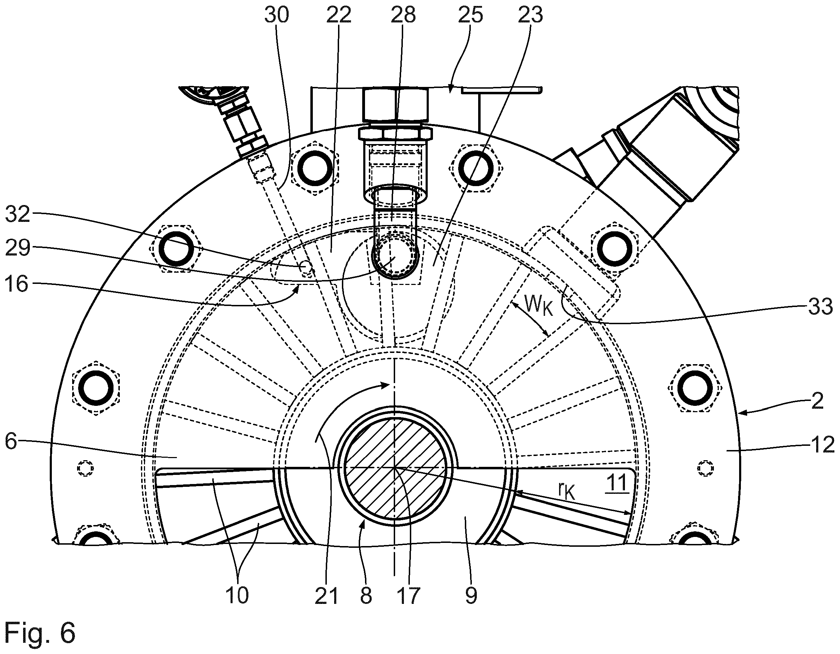

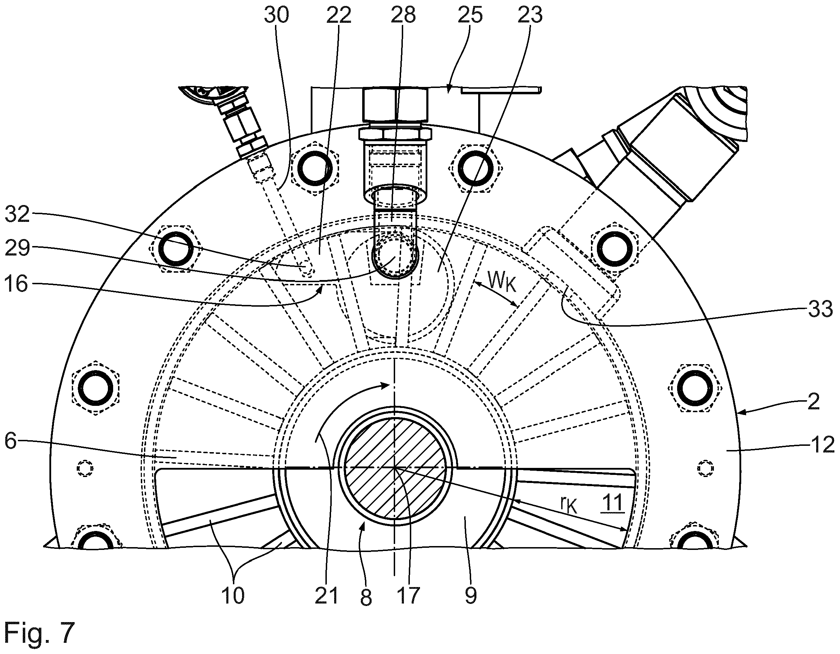

Durch eine weitere Drehbewegung des Zellenrads 9, die in Fig. 6 und 7 dargestellt ist, wird der Kohlenstaub weiterhin und kontinuierlich durch den Anfangsabschnitt 22 der Auslauföffnung 16 abgegeben. Durch die Zuführung von Druckluft über die erste Zuluftöffnung 29 ist gewährleistet, dass die Zellenradkammer 11 von oben mit Druckluft durchströmt wird. Die Zellenradkammer 11 der Zellenradschleuse 2 wird vollständig entleert. Gemäß einer weiteren Drehbewegung des Zellenrads 9 in Drehrichtung 21 wird der restliche, noch in der Zellenradkammer 11 befindliche Kohlenstaub über den Endabschnitt 23 in das Fallrohr 24 abgegeben. Dadurch, dass die Radialausdehnung des Endabschnitts 23 im Wesentlichen der Radialausdehnung der Zellenradkammer 11 entspricht, wird die vollständige Entleerung der Zellenradkammer 11 vereinfacht.

Die Druckluftmenge, die über die erste Druckluftleitung 28 und/oder über die zweite Druckluftleitung 30 zugeführt wird, ist veränderlich einstellbar.

Die durch die Entleerung der Zellenradkammer 11 entstandene Leckluft wird aus der jeweiligen Zellenradkammer 11 über die Absaugöffnung 33 und die Absaugleitung 34 aus der Zellenradschleuse 2 abgesaugt und der Förderleitung 25 zugeführt. Das Absaugverhalten ist durch die in der Absaugleitung 34 integrierte Venturi-Düse 35 verbessert. Durch die Venturi-Düse 35 wird in der Absaugleitung 34 ein Sogstrom erzeugt.

Dadurch, dass der aus der Zellenradschleuse 2 abgegebene Kohlenstaub auf die Rutschfläche 43 des Fallrohrs 24 trifft, dient das Fallrohr 24 als Rutsche. Dadurch ist verhindert, dass der abgegebene Kohlenstaub ungebremst vertikal nach unten in die Förderleitung 25 fällt. Der Kohlenstaub wird durch die geneigte Rutschfläche 43 des Fallrohrs 24 gezielt und gleichmäßig an der Förderleitung 25 aufgegeben.

Der über das Fallrohr 24 der Förderleitung 25 aufgegebene Kohlenstaub und die über die Absaugleitung 34 abgesaugte Leckluft gelangen in der Förderleitung 25 in den Injektor 36, der insbesondere eine nicht dargestellte Injektordüse aufweist. Durch die von dem nicht dargestellten Fördergebläse erzeugte Förderluft wird der Kohlenstaub entlang der Förderrichtung 27 durch die Förderleitung 25 dem nicht dargestellten Brenner zugeführt.

Die Kohlenstaubverbrennungsvorrichtung 1 gewährleistet eine gleichmäßige und kontinuierliche Zuführung von Kohlenstaub aus der Zellenradschleuse 2 in den Brenner 3.

## Patentansprüche

1. Zellenradschleuse zur Kohlenstaubdosierung für einen Brenner umfassend
a. ein Gehäuse (12) mit einer Zulauföffnung (13) zum Zuführen von Kohlenstaub in die Zellenradschleuse (2),
b. eine Auslauföffnung (16) zur Abgabe von Kohlenstaub aus der Zellenradschleuse (2),
c. ein in dem Gehäuse (12) um eine Drehachse (17) entlang einer Drehrichtung (21) drehantreibbar gelagertes Zellenrad (9),
wobei die Auslauföffnung (16) eine Kontur derart aufweist, dass die Abgabe des Kohlenstaubs aus der Zellenradschleuse (2) gleichmäßig erfolgt,
wobei die Kontur einen in Drehrichtung (21) vorlaufenden Anfangsabschnitt (22) aufweist, dessen Radialausdehnung (r_{A}) in Bezug auf die Drehachse (17) kleiner ist als eine Radialausdehnung (r_{E}) eines in Drehrichtung (21) nachlaufenden Endabschnitts (23), wobei die Radialausdehnung (r_{A}) des Anfangsabschnitts (22) entlang der Drehrichtung (21) ansteigt, wobei der Anfangsabschnitt (22) als ein sich in Drehrichtung (21) öffnendes U ausgeführt ist,
**dadurch gekennzeichnet, dass** die Auslauföffnung (16) in einem Übergangsbereich zwischen dem Anfangsabschnitt (22) und dem Endabschnitt (23) konkav ausgeführt ist.

2. Zellenradschleuse gemäß Anspruch 1, **dadurch gekennzeichnet, dass** die Radialausdehnung (r_{A}) des Anfangsabschnitts (22) entlang der Drehrichtung (21) kontinuierlich ansteigt.

3. Zellenradschleuse gemäß Anspruch 1 oder 2, **dadurch gekennzeichnet, dass** der Endabschnitt (23) kreisförmig ausgeführt ist.

4. Zellenradschleuse gemäß einem der Ansprüche 1 bis 3, **dadurch gekennzeichnet, dass** der Anfangsabschnitt (22) sich entlang eines Drehwinkels (w_{A}) erstreckt, der mindestens 50% einer Kammerbreite (w_{K}) einer Zellenradkammer (11) beträgt.

5. Zellenradschleuse gemäß einem der Ansprüche 1 bis 4, **dadurch gekennzeichnet, dass** der Endabschnitt (23) sich entlang eines Drehwinkels (w_{E}) erstreckt, der mindestens 100% einer Kammerbreite (w_{K}) einer Zellenradkammer (11) beträgt.

6. Zellenradschleuse gemäß einem der Ansprüche 1 bis 5, **dadurch gekennzeichnet, dass** die Radialausdehnung (r_{A}) des Anfangsabschnitts (22) kleiner ist als 50% der Radialausdehnung (r_{E}) einer Zellenradkammer (11).

7. Zellenradschleuse gemäß einem der Ansprüche 1 bis 6, **dadurch gekennzeichnet, dass** die Radialausdehnung (r_{E}) des Endabschnitts (23) größer ist als 70% der Radialausdehnung (r_{K}) einer/der Zellenradkammer (11).

8. Zellenradschleuse gemäß einem der vorstehenden Ansprüche, **dadurch gekennzeichnet, dass** die Kontur der Auslauföffnung (16) tropfenförmig oder pfeifenförmig ausgeführt ist.

9. Zellenradschleuse gemäß einem der vorstehenden Ansprüche, **dadurch gekennzeichnet, dass** die Auslauföffnung (16) in einem unteren Gehäusedeckel (15) der Zellenradschleuse (2) angeordnet ist.

## Claims

1. A cellular wheel sluice for metering pulverized coal for a burner comprising
a. a housing (12) with an inlet opening (13) for feeding pulverized coal into the cellular wheel sluice (2),
b. a discharge opening (16) for discharging pulverized coal from the cellular wheel sluice (2),
c. a cellular wheel (9) mounted in the housing (12) so as to be rotatably drivable about an axis of rotation (17) along a direction of rotation (21),
wherein the discharge opening (16) has a contour such that the discharge of the pulverized coal from the cellular wheel sluice (2) takes place in a uniform manner,
wherein the contour has an initial portion (22) leading in the direction of rotation (21), the radial extent (r_{A}) of which with respect to the axis of rotation (17) is smaller than a radial extent (r_{E}) of an end portion (23) running downstream in the direction of rotation (21), wherein the radial extent (r_{A}) of the initial portion (22) increases along the direction of rotation (21), wherein the initial portion (22) is designed as a U opening in the direction of rotation (21),
**characterized in that** the discharge opening (16) is configured to be concave in a transition region between the initial portion (22) and the end portion (23).

2. A cellular wheel sluice according to claim 1, **characterized in that** the radial extent (rA) of the initial portion (22) increases continuously along the direction of rotation (21).

3. A cellular wheel sluice according to claim 1 or 2, **characterized in that** the end portion (23) is configured to be circular.

4. A cellular wheel sluice according to any one of claims 1 to 3, **characterized in that** the initial portion (22) extends along an angle of rotation (w_{A}) which is at least 50% of a chamber width (w_{K}) of a cellular wheel chamber (11).

5. A cellular wheel sluice according to any one of claims 1 to 4, **characterized in that** the end portion (23) extends along an angle of rotation (w_{E}) which is at least 100% of a chamber width (w_{K}) of a cellular wheel chamber (11).

6. A cellular wheel sluice according to any one of claims 1 to 5, **characterized in that** the radial extent (r_{A}) of the initial portion (22) is less than 50% of the radial extent (r_{E}) of a cellular wheel chamber (11).

7. A cellular wheel sluice according to any one of claims 1 to 6, **characterized in that** the radial extent (r_{E}) of the end portion (23) is greater than 70% of the radial extent (r_{K}) of one/the cellular wheel chamber (11).

8. A cellular wheel sluice according to any one of the preceding claims, **characterized in that** the contour of the discharge opening (16) is configured to be drop-shaped or pipe-shaped.

9. A cellular wheel sluice according to any one of the preceding claims, **characterized in that** the discharge opening (16) is arranged in a lower housing cover (15) of the cellular wheel sluice (2).

## Revendications

1. Vanne à roue cellulaire destinée au dosage de charbon pulvérisé pour un brûleur, comprenant
a. un boîtier (12) avec une ouverture d'entrée (13) pour alimenter du charbon pulvérisé dans la vanne à roue cellulaire (2),
b. une ouverture de décharge (16) pour décharger le charbon pulvérisé de la vanne à roue cellulaire (2),
c. une roue cellulaire (9) montée dans le boîtier (12) de manière à pouvoir être entraînée en rotation autour d'un axe de rotation (17) le long d'une direction de rotation (21),
dans laquelle l'ouverture de décharge (16) a un contour tel que la décharge du charbon pulvérisé de la vanne à roue cellulaire (2) a lieu uniformément,
dans laquelle le contour a une section initiale (22) menant dans la direction de rotation (21), dont l'extension radiale (r_{A}) par rapport à l'axe de rotation (17) est inférieure à une extension radiale (r_{E}) d'une section terminale (23) s'étendant en aval dans la direction de rotation (21), l'extension radiale (r_{A}) de la section initiale (22) augmentant le long de la direction de rotation (21), la section initiale (22) étant conçue comme une ouverture en U dans la direction de rotation (21), **caractérisée en ce que** l'ouverture de décharge (16) est de forme concave dans une région de transition entre la section initiale (22) et la section terminale (23).

2. Vanne à roue cellulaire selon la revendication 1, **caractérisée en ce que** l'extension radiale (r_{A}) de la section initiale (22) augmente de manière continue le long de la direction de rotation (21).

3. Vanne à roue cellulaire selon la revendication 1 ou 2, **caractérisée en ce que** la section terminale (23) est de forme circulaire.

4. Vanne à roue cellulaire selon l'une quelconque des revendications 1 à 3, **caractérisée en ce que** la section initiale (22) s'étend le long d'un angle de rotation (w_{A}) qui est d'au moins 50 % d'une largeur de chambre (w_{K}) d'une chambre de vanne à roue (11).

5. Vanne à roue cellulaire selon l'une quelconque des revendications 1 à 4, **caractérisée en ce que** la section terminale (23) s'étend le long d'un angle de rotation (w_{E}) qui est d'au moins 100 % d'une largeur de chambre (w_{K}) d'une chambre de vanne à roue (11).

6. Vanne à roue cellulaire selon l'une quelconque des revendications 1 à 5, **caractérisée en ce que** l'extension radiale (r_{A}) de la section initiale (22) est inférieure à 50% de l'extension radiale (r_{E}) d'une chambre de vanne à roue (11).

7. Vanne à roue cellulaire selon l'une quelconque des revendications 1 à 6, **caractérisée en ce que** l'extension radiale (r_{E}) de la section terminale (23) est supérieure à 70 % de l'extension radiale (r_{K}) d'une/de la chambre de vanne à roue (11).

8. Vanne à roue cellulaire selon l'une quelconque des revendications précédentes, **caractérisée en ce que** le contour de l'ouverture de décharge (16) est en forme de goutte ou de pipe.

9. Vanne à roue cellulaire selon l'une quelconque des revendications précédentes, **caractérisée en ce que** l'ouverture de décharge (16) est disposée dans un couvercle de boîtier inférieur (15) de la vanne à roue cellulaire (2).
